# FASCICULE DE BREVET EUROPEEN

(11) **EP 4 150 229 B1**
(45) Date de publication et mention de la délivrance du brevet: **29.01.2025**
(21) Numéro de dépôt: 21726847.3
(22) Date de dépôt: 30.04.2021
(51) Int. Cl.: F16D 51/24, F16D 65/00, F16D 65/22, F16D 51/14

(54) **CYLINDRE DE ROUE AMORTI PAR RAPPORT AU PLATEAU SUPPORT, FREIN A TAMBOUR COMPRENANT LEDIT CYLINDRE ET PROCEDE D'ASSEMBLAGE DUDIT FREIN A TAMBOUR**
ACHSFLANSCHGEDÄMPFTER BREMSZYLINDER, TROMMELBREMSE MIT DEM ZYLINDER UND VERFAHREN ZUR MONTAGE DER TROMMELBREMSE
WHEEL CYLINDER DAMPED WITH RESPECT TO THE AXLE FLANGE, DRUM BRAKE COMPRISING SAID CYLINDER AND METHOD FOR ASSEMBLING SAID DRUM BRAKE

(30) Priorité: 11.05.2020 FR 2004610
(43) Date de publication de la demande: 22.03.2023
(73) Titulaire: Hitachi Astemo France, 93700 Drancy (FR)
(72) Inventeur: TISSIER, Grégory, 75011 PARIS (FR); MONTEGU, Didier, 94420 LE PLESSIS TREVISE (FR); LEVASSORT, Ludovic, 95630 MERIEL (FR); EBLE, Philippe, 60260 LAMORLAYE (FR); WIEDER, Georges, 91140 VILLEBON SUR YVETTE (FR)
(74) Mandataire: IPAZ
(86) Numéro de dépôt international: PCT/EP2021/061422
(87) Numéro de publication internationale: WO 2021/228586

(56) Documents cités:
- FR-A1- 2 771 146
- FR-A1- 3 003 322
- FR-B1- 2 771 146
- US-A- 5 924 526
- US-A1- 2020 056 667

## Description

L'invention se rapporte à cylindre de roue pour un frein à tambour de véhicule routier, en particulier pour une automobile, un frein à tambour équipé dudit cylindre de roue et un ensemble comprenant ledit cylindre de roue, un élément d'appui élastique et un élément d'arrêt en translation.

### Etat de la technique

Dans un véhicule automobile, la fonction de frein de service consiste à ralentir un véhicule et obtenir son arrêt. Dans la plupart des automobiles actuelles, en particulier au niveau de l'essieu arrière, le frein de service est assuré par des freins à tambour.

Un frein à tambour comprend :
- un plateau support fixe par rapport au châssis du véhicule,
- un tambour monté en rotation par rapport audit plateau, présentant une piste intérieure destinée à coopérer avec des garnitures de frottement,
- deux segments de freinage ayant chacun une forme en arc de cercle, chaque segment comprenant une garniture de frottement, les deux segments étant montés relativement au plateau et mobiles entre une position inactive, dans laquelle ils sont rappelés élastiquement vers l'axe du tambour de manière qu'il existe un jeu déterminé entre chaque garniture et la piste intérieure du tambour, et une position active, dans laquelle ils sont sollicités radialement contre la piste intérieure du tambour,
- un cylindre de roue hydraulique comprenant un boîtier et deux pistons hydrauliques logés à l'intérieur du boîtier, chaque piston étant agencé pour solliciter un segment de freinage vers la position active, le cylindre de roue étant monté sur le plateau par l'intermédiaire de vis traversant le plateau et coopérant avec le boîtier.

Or, il a été constaté que l'activation du frein à tambour, afin de ralentir le véhicule, engendrait des nuisances sonores à cause de vibrations entre le cylindre de roue et le plateau.

Afin de remédier à ce problème, le document FR3003322 a proposé, en référence à la FIGURE 1, d'interposer un élément de guidage 54 entre une portée 36 du cylindre de roue hydraulique 24 et un perçage 38 du plateau fixe 12 afin de découpler vibratoirement le cylindre de roue 24 du plateau fixe 12 en l'autorisant à vibrer axialement.

Bien que satisfaisant, il a été constaté que la vis de fixation 48 ne permettait pas à l'élément de guidage d'autoriser complétement cette vibration à cause du serrage par ladite vis 48 entre le cylindre de roue 24 et le plateau 12.

Un but de la présente invention est de proposer une solution supprimant, ou du moins limitant, les nuisances sonores générées par les freins à tambour.

Elle cherche aussi à limiter la masse du frein à tambour. Elle cherche en outre à proposer un dispositif économique, offrant un nombre de pièces réduit, une facilité et une économie de fabrication et/ou d'assemblage et/ou de maintenance.

### Exposé de l'invention

Le but précité est atteint grâce à un ensemble selon la revendication 1 et à un procédé d'assemblage selon la revendication 9.

L'invention est telle que définie dans les revendications indépendantes 1 et 9.

Des modes de réalisation particuliers de l'invention sont divulgués dans les revendications dépendantes.

### Liste des figures

D'autres particularités et avantages de l'invention apparaîtront à la lecture de la description détaillée de mises en oeuvre et de modes de réalisation nullement limitatifs, et des dessins annexés où :

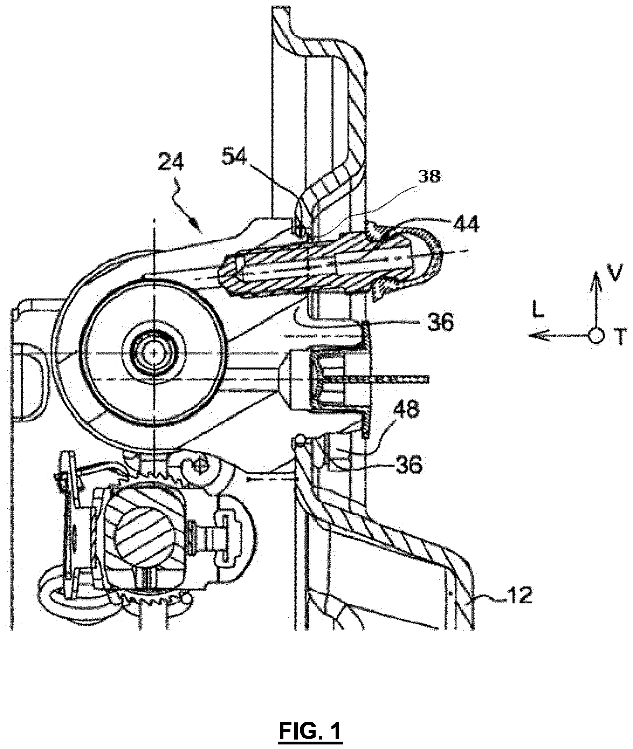

[Fig.1] la FIGURE 1 est une vue en coupe d'un frein à tambour pour véhicule automobile, en particulier un cylindre de roue illustrant un exemple d'art antérieur ;
[Fig.2] la FIGURE 2 est une vue en perspective d'un cylindre de roue selon un mode de réalisation de l'invention, comprenant une rainure agencée sur une face d'appui et une gorge agencée sur la surface extérieure périphérique du conduit d'entrée hydraulique ;
[Fig.3] la FIGURE 3 est une vue en perspective d'un plateau support d'un frein à tambour pour véhicule automobile, comprenant un cylindre de roue conforme à la FIGURE 2, le plateau support étant vu de derrière ;
[Fig.4] la FIGURE 4 montre à plus grande échelle, au niveau du conduit d'entrée hydraulique du cylindre de roue, un plateau support conforme à la FIGURE 3, le conduit d'entrée hydraulique faisant saillie depuis la face arrière du plateau support, le cylindre de roue étant maintenu en position par l'intermédiaire d'un élément d'arrêt en translation disposé dans la gorge du conduit d'entrée hydraulique ;
[Fig.5] la FIGURE 5 est une vue en perspective d'un élément d'appui élastique à droite de la FIGURE, et d'un élément d'arrêt en translation à gauche de la FIGURE ;
[Fig.6] la FIGURE 6 est une vue en coupe d'un frein à tambour comprenant un cylindre de roue conforme à la FIGURE 3 et dont la position relativement au plateau support est conforme aux FIGURES 3 et 4, un détail agrandi du conduit d'entrée hydraulique étant visible à droite de la FIGURE 6 ;
[Fig.7] la FIGURE 7 est une vue en perspective d'un cylindre de roue selon un autre mode de réalisation, comprenant une rainure agencée sur une face d'appui, une gorge agencée sur la surface extérieure périphérique du conduit d'entrée hydraulique et un pion anti-rotation faisant saillie depuis la face d'appui dudit cylindre et parallèlement au conduit d'entrée hydraulique ;
[Fig.8] la FIGURE 8 montre à plus grande échelle, au niveau du conduit d'entrée hydraulique d'un cylindre de roue, un plateau support vu de derrière, ledit plateau support étant équipé d'un cylindre de roue conforme à la FIGURE 7.

### Description des figures et modes de réalisation

Ces modes de réalisation n'étant nullement limitatifs, on pourra notamment réaliser des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

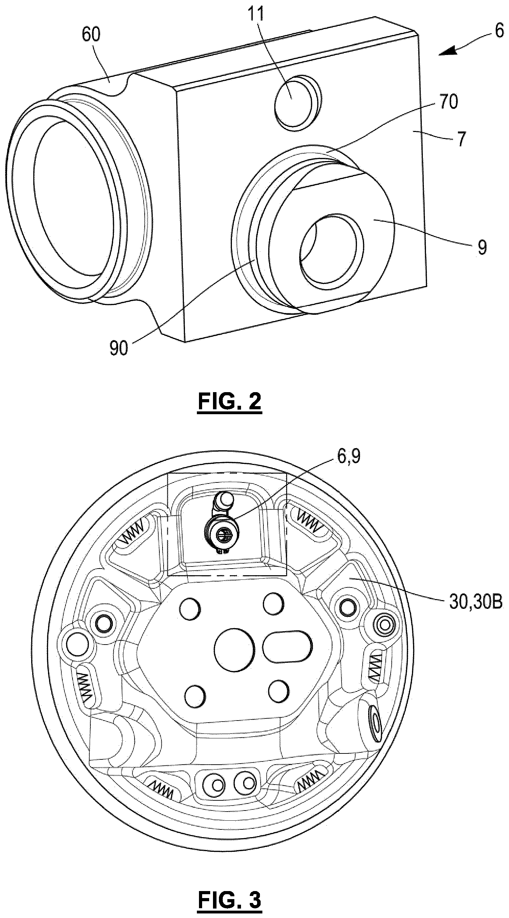

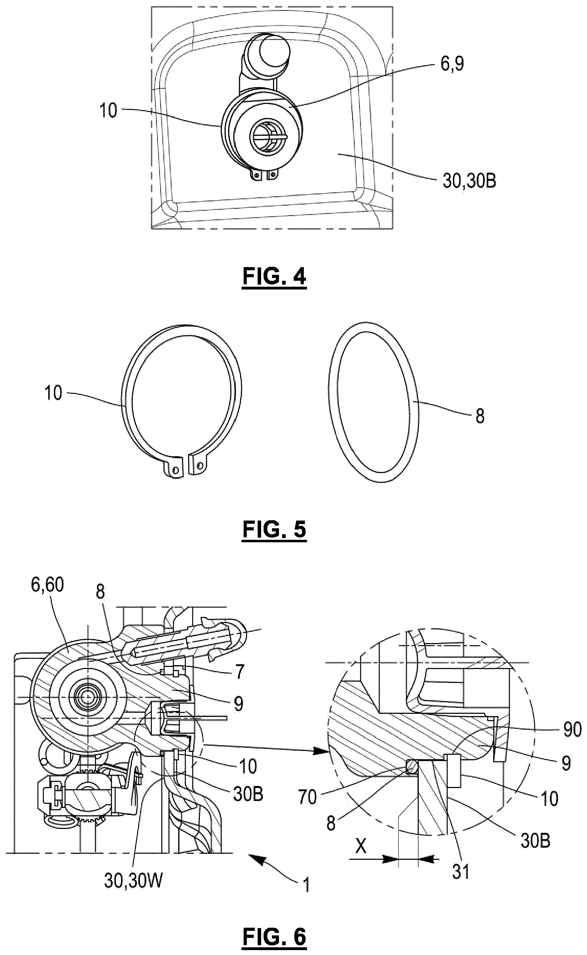

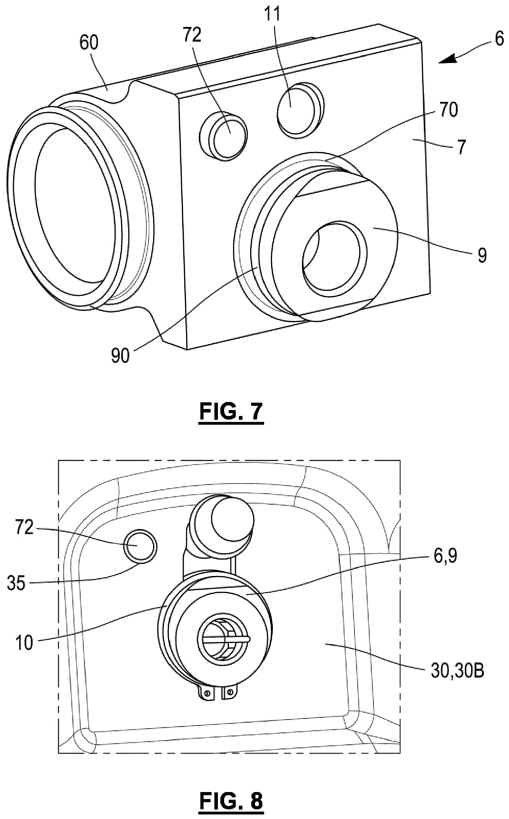

Les figures 2 et 7 illustrent un cylindre de roue hydraulique 6, dit aussi actionneur de frein ou actionneur principal, pour frein à tambour de véhicule automobile. Le cylindre de roue hydraulique est agencé et configuré pour un frein à tambour 1 du type comprenant :
- un plateau support 30, fixe en rotation par rapport au châssis du véhicule (non représenté), ledit plateau 30 présentant une face avant 30W, dite aussi face côté roue, et une face arrière 30B, dite face côté châssis, de sorte que ledit plateau support 30 est relié au châssis du véhicule par l'intermédiaire, ou du côté, de la face arrière 30B (voir figure 6),
- un tambour (non représenté) monté mobile en rotation par rapport audit plateau support, présentant une piste intérieure destinée à coopérer avec des garnitures de frottement,
- deux segments de freinage (non représentés), ayant chacun une forme en arc de cercle, chaque segment de freinage comprenant une garniture de frottement, les deux segments de freinage étant montés relativement à la face avant du plateau et mobiles entre une position inactive, dans laquelle lesdits deux segments de freinage sont rappelés élastiquement vers l'axe du tambour de manière qu'il existe un jeu déterminé entre chaque garniture de frottement et la piste intérieure du tambour, et une position active, dans laquelle les deux segments de freinage sont sollicités radialement contre la piste intérieure du tambour,
- un cylindre de roue hydraulique 6, agencé pour solliciter les deux segments de freinage vers la position active.

Le plateau support est relié au châssis du véhicule automobile et fixé par rapport audit véhicule. Le tambour est tournant relativement audit plateau support. Le tambour est solidaire en rotation avec une roue du véhicule automobile (non représenté).

En référence aux figures 2, 6 et 7, le cylindre de roue hydraulique 6 comprend un boîtier 60 logeant au moins un piston hydraulique (non représenté). Le cylindre de roue 6 comprend une chambre et deux conduits hydrauliques, un conduit d'entrée hydraulique 9 et un conduit de retour hydraulique 11. Les deux conduits sont reliés à ladite chambre de manière qu'un fluide hydraulique peut s'écouler entre le conduit d'entrée 9, ladite chambre et le conduit de retour 11 lors d'une commande du frein à tambour par l'utilisateur. Le cylindre de roue 6 présente, sur la surface extérieure du boîtier 60, une face d'appui 7 agencée et configurée pour être disposée en vis-à-vis de la face avant 30W du plateau support (voir figure 6). Selon les modes de réalisation représentés, la face d'appui est sensiblement plane. L'embouchure du conduit de retour hydraulique 11 se situe sur la face d'appui 7. Le conduit d'entrée hydraulique 9 fait saillie depuis la face d'appui 7.

En référence aux figures 3, 4, 6 et 8, le conduit d'entrée hydraulique 9 est prévu pour traverser une ouverture de conduit 31 (voir figure 6) agencée dans le plateau support 30 de manière que ledit conduit d'entrée hydraulique 9 fait également saillie depuis la face arrière 30B dudit plateau.

Selon un mode de réalisation et en référence à la figure 2, le cylindre de roue hydraulique 6 comprend une rainure 70 formée dans la face d'appui 7. La rainure 70 s'étend de manière circulaire autour et près de la base du conduit d'entrée hydraulique 9. Elle est agencée pour recevoir un élément d'appui élastique 8, du type joint torique, représenté à droite de la figure 5. En référence à la figure 6, l'élément d'appui élastique 8 présente une épaisseur supérieure à la profondeur de la rainure 70 de sorte qu'il existe un jeu ou écart X non nul entre la face d'appui 7 et la face avant 30W du plateau support 30 lorsque le cylindre de roue 6 est mis en position sur le plateau support 30 et maintenu en position par l'élément d'appui élastique 8 et l'élément d'arrêt en translation. Cet écart X est strictement supérieur à zéro et inférieur ou égal à un millimètre. Dans la position de maintien, l'élément d'appui élastique 8 est légèrement comprimé axialement par la rainure 70 du cylindre de roue 6 et par la face avant 30W du plateau support 30.

Le cylindre de roue hydraulique 6 comprend en outre une gorge 90 formée sur la surface périphérique du conduit d'entrée hydraulique 9. Elle est agencée pour recevoir un élément d'arrêt en translation 10, du type anneau élastique, représenté à gauche de la figure 5.

En référence à la figure 6, la distance entre la face d'appui 7 et le bord proximal de la gorge 90 est inférieure à l'épaisseur du plateau support 30, le bord distal de ladite gorge 90 étant en contact avec l'élément d'arrêt en translation 10 lorsque le cylindre de roue 6 est mis en position sur le plateau support 30 et maintenu en position par l'élément d'appui élastique 8 et l'élément d'arrêt en translation 10. L'élément d'arrêt en translation 10 est en butée contre la face arrière 30B du plateau support 30.

Cet agencement permet à l'élément d'appui élastique 8 d'être solliciter axialement de manière à amortir les mouvements parasites du cylindre de roue 6 par rapport au plateau support 30 et ainsi limiter en tout ou partie les vibrations dudit cylindre et/ou dudit plateau.

Selon un autre mode de réalisation qui sera décrit par ses différences par rapport au précédent mode de réalisation, et en référence aux figures 7 et 8, le cylindre de roue hydraulique 6 comprend un pion anti-rotation 72. Le pion anti-rotation 72 est disposé sur la face d'appui 7 et fait saillie depuis ladite face d'appui parallèlement au conduit d'entrée hydraulique 9. Le pion présente la forme d'un cylindre, voir figure 7. En référence à la figure 8, le pion anti-rotation est prévu pour s'insérer dans une ouverture de pion 35 du plateau support 30. Une fois disposé à l'intérieur de l'ouverture de pion 35, le pion 72 réalise une fonction d'anti-rotation du cylindre de roue 6 par rapport au plateau support 30. Cette caractéristique permet de faciliter l'assemblage du cylindre de roue par rapport au plateau support.

On va maintenant décrire le procédé d'assemblage d'un frein à tambour, en particulier d'un cylindre de roue hydraulique 6 sur un plateau support 30. Le procédé d'assemblage prévoit les étapes suivantes :
- fournir un cylindre de roue hydraulique 6 tel que décrit précédemment et représenté par la figure 2 ou 7,
- fournir un élément d'appui élastique 8 et un élément d'arrêt en translation 10, tels que décrits précédemment et représenté par la figure 5,
- positionner, par un déplacement axial le long du conduit d'entrée hydraulique 9, l'élément d'appui élastique 8 dans la rainure 70 ménagée sur la face d'appui 7 du cylindre de roue hydraulique 6,
- positionner sur le plateau support le cylindre de roue hydraulique 6 équipé de l'élément d'appui élastique 8 de manière que le conduit d'entrée hydraulique 9 s'insère dans l'ouverture de conduit 31 et que ledit conduit 9 fasse saillie depuis la face arrière 30B du plateau support jusqu'au contact de l'élément d'appui élastique 8 sur la face avant 30W dudit plateau,
- positionner, par un déplacement axial et/ou radial par rapport au conduit d'entrée hydraulique 9, l'élément d'arrêt en translation 10 dans la gorge 90 du conduit d'entrée hydraulique.

Selon un mode de réalisation, le procédé d'assemblage prévoit d'appliquer un effort mécanique sur le cylindre de roue 6. Cet effort est dirigé axialement selon l'axe du conduit d'entrée hydraulique 9 et en direction du plateau support, de manière à comprimer l'élément d'appui élastique, par exemple jusqu'au contact de la face d'appui avec la face avant du plateau support. Cette opération permet de décaler la gorge 90 par rapport à la face arrière 30B du plateau support en direction du châssis, de manière à faciliter l'insertion ou le coulissement de l'élément d'arrêt en translation dans ladite gorge. Une fois l'insertion dudit élément d'arrêt réalisée, et du fait des propriétés élastiques de l'élément d'appui élastique, l'élément d'appui élastique repousse la face d'appui par rapport à la face avant du plateau support et l'élément d'arrêt en translation s'appuie sur la face arrière dudit plateau, voir la figure 6.

### Nomenclature

1 frein à tambour
6 cylindre de roue hydraulique
7 face d'appui du cylindre de roue hydraulique
8 élément d'appui élastique - joint torique
9 conduit d'entrée hydraulique
10 élément d'arrêt en translation - anneau élastique
11 conduit de retour hydraulique
30 plateau support
30B face arrière ou face côté châssis du plateau support
30W face avant ou face côté roue du plateau support
31 ouverture de conduit
35 ouverture de pion
60 boîtier du cylindre de roue hydraulique
70 rainure
72 pion anti-rotation
90 gorge

### Nomenclature art antérieur

12 plateau fixe
24 cylindre de roue hydraulique
36 portée
38 perçage du plateau
48 vis
54 élément de guidage

## Revendications

1. Ensemble comprenant :
un cylindre de roue hydraulique (6) pour frein à tambour (1) de véhicule automobile, le frein à tambour étant du type comprenant :
- un plateau support (30), fixe en rotation par rapport au châssis du véhicule, ledit plateau support (30) présentant une face avant (30W) et une face arrière (30B) de sorte que ledit plateau support (30) est relié au châssis du véhicule par l'intermédiaire de la face arrière (30B),
- un tambour monté mobile en rotation par rapport audit plateau support, présentant une piste intérieure destinée à coopérer avec des garnitures de frottement,
- deux segments de freinage, ayant chacun une forme en arc de cercle, chaque segment de freinage comprenant une garniture de frottement, les deux segments de freinage étant montés relativement à la face avant du plateau et mobiles entre une position inactive, dans laquelle lesdits deux segments de freinage sont rappelés élastiquement vers l'axe du tambour de manière qu'il existe un jeu déterminé entre chaque garniture de frottement et la piste intérieure du tambour, et une position active, dans laquelle les deux segments de freinage sont sollicités radialement contre la piste intérieure du tambour,
- ledit cylindre étant agencé pour solliciter les deux segments de freinage vers la position active,
le cylindre de roue hydraulique (6) comprenant :
- un boîtier (60), dans lequel est logé au moins un piston hydraulique, présentant une face d'appui (7) destinée à être disposée en vis-à-vis de la face avant (30W) du plateau support (30),
- un conduit d'entrée hydraulique (9) faisant saillie depuis la face d'appui (7) et qui est prévu pour traverser une ouverture de conduit (31) agencée dans le plateau support (30) de manière que ledit conduit (9) fait saillie depuis la face arrière (30B) du plateau support (30),
ledit ensemble étant **caractérisé en ce qu'**il comprend un élément d'appui élastique (8) et un élément d'arrêt en translation (10) prévus pour coopérer avec la face d'appui (7) et respectivement le conduit d'entrée hydraulique (9) dudit cylindre de roue hydraulique (6),
et **en ce que** ledit cylindre de roue hydraulique comprend :
- une zone d'appui agencée sur la face d'appui (7) du boîtier (60) de manière à recevoir ledit élément d'appui élastique (8) qui est prévu pour être intercalé longitudinalement entre ladite zone d'appui du cylindre de roue hydraulique (6) et la face avant (30W) du plateau support (30), et
- une gorge (90) agencée sur la surface extérieure du conduit d'entrée hydraulique (9) de manière à recevoir ledit élément d'arrêt en translation (10) qui est prévu pour venir en butée contre la face arrière (30B) du plateau support (30) lorsque le conduit d'entrée hydraulique (9) fait saillie depuis ladite face arrière (30B).

2. Ensemble selon la revendication 1, **caractérisé en ce que** la zone d'appui comprend une rainure (70) formée dans la face d'appui (7) du cylindre de roue hydraulique (6), et s'étend autour du conduit d'entrée hydraulique (9) de manière que l'élément d'appui élastique (8) peut être inséré dans ladite rainure (70).

3. Ensemble selon la revendication 2, **caractérisé en ce que** la rainure (70) présente une profondeur inférieure à l'épaisseur de l'élément d'appui élastique (8).

4. Ensemble selon l'une des revendications 1 à 3, **caractérisé en ce qu'**le cylindre de roue comprend un pion (72) agencé sur la face d'appui (7) et prévu pour engager ou traverser une ouverture de pion (35) agencée dans le plateau support (30) de manière que ledit pion (72) peut s'insérer dans l'ouverture de pion (35).

5. Ensemble selon l'une quelconque des revendications précédentes, dans lequel l'élément d'appui élastique (8) est du type joint torique, notamment en élastomère.

6. Ensemble selon l'une quelconque des revendications précédentes, dans lequel l'élément d'arrêt en translation (10) est un anneau élastique.

7. Frein à tambour (1) pour véhicule automobile, comprenant :
- un plateau support (30), fixe en rotation par rapport au châssis du véhicule, ledit plateau support (30) présentant une face avant (30W) et une face arrière (30B) de sorte que ledit plateau support (30) est relié au châssis du véhicule par l'intermédiaire de la face arrière (30B),
- deux segments de freinage, ayant chacun une forme en arc de cercle, chaque segment de freinage comprenant une garniture de frottement, les deux segments de freinage étant montés relativement à la face avant du plateau support et mobiles entre une position inactive, dans laquelle lesdits deux segments de freinage sont rappelés élastiquement vers l'axe du tambour de manière qu'il existe un jeu déterminé entre chaque garniture de frottement et la piste intérieure du tambour, et une position active, dans laquelle les deux segments de freinage sont sollicités radialement contre la piste intérieure du tambour,
**caractérisé en ce qu'**il comporte un ensemble selon l'une quelconque des revendications précédentes, et **en ce que** ledit cylindre de roue hydraulique (6), agencé pour solliciter les deux segments de freinage vers la position active, est fixé au plateau support (30) par coopération de sa face d'appui (7) avec ledit élément d'appui élastique (8) et par coopération de son conduit d'entrée hydraulique (9) avec ledit élément d'arrêt en translation (10).

8. Véhicule automobile comprenant un frein à tambour (1) selon la revendication 7.

9. Procédé d'assemblage d'un frein à tambour (1) selon la revendication 7, **caractérisé en ce qu'**il comprend les opérations suivantes :
- fournir un ensemble selon l'une quelconque des revendications 1 à 6, comprenant un cylindre de roue hydraulique (6), un élément d'appui élastique (8) et un élément d'arrêt en translation (10), agencés pour pouvoir coopérer avec la face d'appui (7) et respectivement le conduit d'entrée hydraulique (9) dudit cylindre de roue hydraulique (6),
- positionner l'élément d'appui élastique (8) dans la zone d'appui du cylindre de roue hydraulique (6),
- positionner le cylindre de roue hydraulique (6) sur le plateau support (30) de manière que le conduit d'entrée hydraulique (9) fait saillie depuis la face arrière (30B) du plateau support (30),
- positionner l'élément d'arrêt en translation (10) dans la gorge (90) du conduit d'entrée hydraulique (9).

## Patentansprüche

1. Anordnung, die das Folgende aufweist:
einen hydraulischen Radzylinder (6) für eine Trommelbremse (1) eines Kraftfahrzeugs, wobei die Trommelbremse von der Art ist, die das Folgende umfasst:
- eine Trägerplatte (30), die in Bezug auf das Fahrgestell des Fahrzeugs drehfest ausgebildet ist, wobei die Trägerplatte (30) eine Vorderseite (30W) und eine Rückseite (30B) aufweist, derart, dass die Trägerplatte (30) über die Rückseite (30B) mit dem Fahrgestell des Fahrzeugs verbunden ist,
- eine Trommel, die in Bezug auf die Trägerplatte drehbar gelagert ist und eine Innenbahn zum Zusammenwirken mit Reibbelägen aufweist,
- zwei Bremsbacken, die jeweils kreisbogenförmig ausgebildet sind, wobei jede Bremsbacke einen Reibbelag umfasst, wobei die beiden Bremsbacken relativ zur Vorderseite der Platte zwischen einer inaktiven Stellung, in der die beiden Bremsbacken federnd in Richtung der Trommelachse zurückgestellt sind, so dass ein bestimmtes Spiel zwischen jedem Reibbelag und der Innenbahn der Trommel besteht, und einer aktiven Stellung beweglich gelagert sind, in der die beiden Bremsbacken radial an die Innenbahn der Trommel angedrückt sind,
- wobei der Zylinder dazu ausgelegt ist, die beiden Bremsbacken in Richtung der aktiven Stellung zu beaufschlagen,
wobei der hydraulische Radzylinder (6) das Folgende umfasst:
- ein Gehäuse (60), in dem zumindest ein Hydraulikkolben aufgenommen ist und das eine Auflagefläche (7) aufweist, die dazu bestimmt ist, der Vorderseite (30W) der Trägerplatte (30) gegenüberzuliegen,
- eine hydraulische Einlassleitung (9), die von der Auflagefläche (7) vorsteht und dazu vorgesehen ist, durch eine Leitungsöffnung (31) zu verlaufen, die in der Trägerplatte (30) so angeordnet ist, dass die Leitung (9) von der Rückseite (30B) der Trägerplatte (30) vorsteht,
wobei die Anordnung **dadurch gekennzeichnet ist, dass** sie ein elastisches Auflageelement (8) und ein Verschiebesicherungselement (10) umfasst, die dazu vorgesehen sind, jeweils mit der Auflagefläche (7) bzw. der hydraulischen Einlassleitung (9) des hydraulischen Radzylinders (6) zusammenzuwirken,
und dass der hydraulische Radzylinder umfasst:
- einen Auflagebereich, der an der Auflagefläche (7) des Gehäuses (60) angeordnet ist, um ein elastisches Auflageelement (8) aufzunehmen, das zum Einfügen in Längsrichtung zwischen dem Auflagebereich des hydraulischen Radzylinders (6) und der Vorderseite (30W) der Trägerplatte (30) vorgesehen ist, und
- eine Nut (90), die an der Außenfläche der hydraulischen Einlassleitung (9) angeordnet ist, um das Verschiebesicherungselement (10) aufzunehmen, das dazu vorgesehen ist, an der Rückseite (30B) der Trägerplatte (30) zu anzuliegen, wenn die hydraulische Einlassleitung (9) von der Rückseite (30B) vorsteht.

2. Anordnung nach Anspruch 1, **dadurch gekennzeichnet, dass** der Auflagebereich eine Rille (70) aufweist, die in der Auflagefläche (7) des hydraulischen Radzylinders (6) ausgebildet ist und sich um die hydraulische Einlassleitung (9) herum erstreckt, so dass das elastische Auflageelement (8) in die Rille (70) eingesetzt werden kann.

3. Anordnung nach dem Anspruch 2, **dadurch gekennzeichnet, dass** die Rille (70) eine Tiefe aufweist, die geringer ist als die Dicke des elastischen Auflageelements (8).

4. Anordnung nach einem der Ansprüche 1 bis 3, **dadurch gekennzeichnet, dass** der Radzylinder einen Zapfen (72) aufweist, der an der Auflagefläche (7) angeordnet und dazu vorgesehen ist, in eine in der Trägerplatte (30) ausgebildete Zapfenöffnung (35) einzugreifen oder diese zu durchsetzen, so dass sich der Zapfen (72) in die Zapfenöffnung (35) einfügen kann.

5. Anordnung nach einem der vorhergehenden Ansprüche, wobei das elastische Auflageelement (8) vom Typ O-Ring ist, insbesondere aus Elastomer.

6. Anordnung nach einem der vorhergehenden Ansprüche, wobei das Verschiebesicherungselement (10) ein elastischer Ring ist.

7. Trommelbremse (1) für ein Kraftfahrzeug, die das Folgende umfasst:
- eine Trägerplatte (30), die in Bezug auf das Fahrgestell des Fahrzeugs drehfest ausgebildet ist, wobei die Trägerplatte (30) eine Vorderseite (30W) und eine Rückseite (30B) aufweist, derart, dass die Trägerplatte (30) über die Rückseite (30B) mit dem Fahrgestell des Fahrzeugs verbunden ist,
- zwei Bremsbacken, die jeweils kreisbogenförmig ausgebildet sind, wobei jede Bremsbacke einen Reibbelag umfasst, wobei die beiden Bremsbacken relativ zur Vorderseite der Platte zwischen einer inaktiven Stellung, in der die beiden Bremsbacken federnd in Richtung der Trommelachse zurückgestellt sind, so dass ein bestimmtes Spiel zwischen jedem Reibbelag und der Innenbahn der Trommel besteht, und einer aktiven Stellung beweglich gelagert sind, in der die beiden Bremsbacken radial an die Innenbahn der Trommel angedrückt sind, **dadurch gekennzeichnet, dass** sie eine Anordnung nach einem der vorhergehenden Ansprüche umfasst und dass der hydraulische Radzylinder (6) zum Beaufschlagen der beiden Bremsbacken in Richtung der aktiven Stellung durch Zusammenwirken seiner Auflagefläche (7) mit dem elastischen Auflageelement (8) und durch Zusammenwirken seiner hydraulischen Einlassleitung (9) mit dem Verschiebesicherungselement (10) an die Trägerplatte (30) befestigt ist.

8. Kraftfahrzeug mit einer Trommelbremse (1) nach Anspruch 7.

9. Verfahren zum Montieren einer Trommelbremse (1) nach Anspruch 7, **dadurch gekennzeichnet, dass** es die folgenden Schritte umfasst:
- Bereitstellen einer Anordnung nach einem der Ansprüche 1 bis 6, umfassend einen hydraulischen Radzylinder (6), ein elastisches Auflageelement (8) und ein Verschiebesicherungselement (10), die dazu ausgelegt sind, jeweils mit der Auflagefläche (7) bzw. der hydraulischen Einlassleitung (9) des hydraulischen Radzylinders (6) zusammenwirken zu können,
- Positionieren des elastischen Auflageelementes (8) im Auflagebereich des hydraulischen Radzylinders (6),
- Positionieren des hydraulischen Radzylinders (6) an der Trägerplatte (30), derart, dass die hydraulische Einlassleitung (9) von der Rückseite (30B) der Trägerplatte (30) vorsteht,
- Positionieren des Verschiebesicherungselements (10) in der Nut (90) der hydraulischen Einlassleitung (9).

## Claims

1. An assembly comprising:
a hydraulic wheel cylinder (6) for a motor vehicle drum brake (1), the drum brake being of the type comprising :
- a support plate (30), fixed in rotation with respect to the chassis of the vehicle, the said support plate (30) having a front face (30W) and a rear face (30B) so that the said support plate (30) is connected to the chassis of the vehicle via the rear face (30B),
- a drum mounted so as to be able to move in rotation with respect to the said support plate, having an inner track intended to cooperate with friction linings,
- two braking segments, each having the shape of an arc of a circle, each braking segment comprising a friction lining, the two braking segments being mounted relative to the front face of the plate and movable between an inactive position, in which the said two braking segments are returned elastically towards the axis of the drum so that there is a defined clearance between each friction lining and the inner track of the drum, and an active position, in which the two braking segments are urged radially against the inner track of the drum,
- said cylinder being arranged to urge the two brake shoes towards the active position, the hydraulic wheel cylinder (6) comprising :
- a housing (60), in which at least one hydraulic piston is housed, having a bearing face (7) intended to be arranged opposite the front face (30W) of the support plate (30),
- a hydraulic inlet duct (9) projecting from the bearing face (7) and which is intended to pass through a duct opening (31) arranged in the support plate (30) in such a way that said duct (9) projects from the rear face (30B) of the support plate (30),
said assembly being **characterised in that** it comprises a resilient bearing element (8) and a translational stop element (10) provided to cooperate with the bearing face (7) and respectively the hydraulic inlet duct (9) of said hydraulic wheel cylinder (6),
and **in that** said hydraulic wheel cylinder comprises :
- a bearing area arranged on the bearing face (7) of the housing (60) so as to receive said elastic bearing element (8) which is designed to be inserted longitudinally between said bearing area of the hydraulic wheel cylinder (6) and the front face (30W) of the support plate (30), and
- a groove (90) arranged on the outer surface of the hydraulic inlet duct (9) so as to receive said translation stop member (10) which is intended to abut against the rear face (30B) of the support plate (30) when the hydraulic inlet duct (9) projects from said rear face (30B).

2. An assembly as claimed in claim 1, **characterised in that** the abutment region comprises a groove (70) formed in the abutment face (7) of the hydraulic wheel cylinder (6), and extends around the hydraulic inlet duct (9) so that the resilient abutment member (8) can be inserted into said groove (70).

3. An assembly as claimed in claim 2, **characterised in that** the groove (70) has a depth less than the thickness of the resilient support member (8).

4. Assembly according to one of claims 1 to 3, **characterised in that** the wheel cylinder comprises a pin (72) arranged on the bearing face (7) and provided to engage or pass through a pin opening (35) arranged in the bearing plate (30) so that said pin (72) can be inserted into the pin opening (35).

5. Assembly according to any one of the preceding claims, in which the elastic support element (8) is of the O-ring type, in particular made of elastomer.

6. Assembly according to any one of the preceding claims, in which the translational stop element (10) is a resilient ring.

7. Drum brake (1) for a motor vehicle, comprising :
- a support plate (30), fixed in rotation with respect to the chassis of the vehicle, the said support plate (30) having a front face (30W) and a rear face (30B) so that the said support plate (30) is connected to the chassis of the vehicle via the rear face (30B),
- two braking segments, each having the shape of an arc of a circle, each braking segment comprising a friction lining, the two braking segments being mounted relative to the front face of the support plate and movable between an inactive position, in which the said two braking segments are returned elastically towards the axis of the drum so that there is a defined clearance between each friction lining and the inner track of the drum, and an active position, in which the two braking segments are urged radially against the inner track of the drum,
**characterised in that** it comprises an assembly according to any one of the preceding claims, and **in that** said hydraulic wheel cylinder (6), arranged to urge the two brake shoes towards the active position, is fixed to the support plate (30) by cooperation of its bearing face (7) with said elastic bearing element (8) and by cooperation of its hydraulic inlet duct (9) with said translational stop element (10).

8. Motor vehicle comprising a drum brake (1) according to claim 7.

9. A method of assembling a drum brake (1) according to claim 7, **characterised in that** it comprises the following operations:
- providing an assembly according to any one of claims 1 to 6, comprising a hydraulic wheel cylinder (6), a resilient bearing member (8) and a translational stop member (10), arranged to be able to cooperate with the bearing face (7) and respectively the hydraulic inlet duct (9) of said hydraulic wheel cylinder (6),
- positioning the elastic support element (8) in the support area of the hydraulic wheel cylinder (6),
- positioning the hydraulic wheel cylinder (6) on the support plate (30) so that the hydraulic inlet duct (9) projects from the rear face (30B) of the support plate (30),
- positioning the translation stop element (10) in the groove (90) of the hydraulic inlet duct (9).
